# EUROPEAN PATENT SPECIFICATION

(11) **EP 3 489 563 B1**
(45) Date of publication and mention of the grant of the patent: **30.12.2020**
(21) Application number: 18205091.4
(22) Date of filing: 08.11.2018
(51) Int. Cl.: F16L 37/34, F16L 37/56, F16L 29/04

(54) **COUPLING SYSTEM FOR PROVIDING A PLURALITY OF FLUID CONNECTIONS**
KUPPLUNGSSYSTEM ZUR BEREITSTELLUNG EINER VIELZAHL VON FLUIDVERBINDUNGEN
SYSTÈME D'ACCOUPLEMENT POUR FOURNIR UNE PLURALITÉ DE CONNEXIONS FLUIDIQUES

(30) Priority: 27.11.2017 DE 102017128022
(43) Date of publication of application: 29.05.2019
(73) Proprietor: Airbus Operations GmbH, 21129 Hamburg (DE)
(72) Inventor: Hummel, Gerhard, 21129 Hamburg (DE); Weber, Julian, 21129 Hamburg (DE); Scheffer, Sten, 09212 Limbach-Oberfrohna (DE); Gareis, Uwe, 09122 Chemnitz (DE)

(56) References cited:
- EP-A1- 2 383 070
- WO-A1-2012/066728
- DE-A1- 19 920 291
- US-A- 5 322 330
- US-A- 5 464 042

## Description

### TECHNICAL FIELD

The invention relates to a coupling system for providing a plurality of fluid connections and to a vehicle which has a plurality of fluid lines and at least one coupling system of this kind.

### BACKGROUND OF THE INVENTION

Hydraulic quick-acting couplings for providing and interrupting fluid connections have been known for a long time and are used in a very wide variety of stationary and mobile machines. To provide rapid connection between a plurality of hydraulic components or complete systems, it is possible to use "multi-couplings", by means of which a relatively large number of fluid and electric lines can be connected and disconnected simultaneously and repeatedly in a reliable and rapid manner. By means of a fixed arrangement of individual elements of a quick-acting coupling on a carrier plate, it is possible to eliminate confusion when connecting. Multi-couplings fundamentally comprise two coupling halves, one of which is connected in a fixed manner to a structure in order to form or accept a coupling socket and the other is embodied as a loose half in order to accept or form a coupling spigot.

To guide axial coupling spigots into the corresponding coupling sockets, very accurate tolerances have to be maintained in the case of conventional principles, especially in the case of multi-couplings with three or more pairs of coupling spigots and coupling sockets. This is observable particularly in the case of multi-couplings in which both coupling halves are integrated into respective components for financial or technical reasons. Owing to the precise tolerances, joining the coupling halves together can lead to tilting and hence to more difficult assembly.

EP 2 383 070 A1 discloses a clamping system with a fluid coupler having a clamping apparatus, which fixes a movable block having a supported surface to a reference block having a support surface, as well as a fluid coupled disposed apart from the clamping apparatus by a predetermined inter-axial distance.

### SUMMARY OF THE INVENTION

Consequently, there can be a requirement to use a coupling system which is as free of tolerances as possible to connect a plurality of fluid lines and which leads to significant savings in respect of component costs to be expected and to the reduction of production and installation effort.

For this purpose, a coupling system having the features of independent claim 1 is proposed. Advantageous developments and embodiments can be found in the dependent claims and the following description.

A coupling system for providing a plurality of fluid connections is proposed, the coupling system having a first main body, a second main body, a plurality of first connectors, which are arranged on the first main body, and a plurality of second connectors, which are arranged at positions on the second main body which correspond to the first connectors in order to form connector pairs. Each first connector has a first axial sealing sleeve and a first closure device surrounded by said sleeve, which can be moved relative to one another in an axial direction between a first open position and a first closed position and are urged into the first closed position by a first spring. Each second connector has a second axial sealing sleeve and a second closure device surrounded by said sleeve, which can be moved relative to one another in an axial direction between a second open position and a second closed position and are urged into the second closed position by a second spring. The first axial sealing sleeve and the second axial sealing sleeve each have an end-located boundary surface and a fluid port remote from said surface. The first connector and the second connector are designed to bring about sealing between the axial sealing sleeves and to move the first closure device and the second closure device from the respective closed position into the respective open position, in which a fluid connection is established between the respective end-located boundary surface and the respective fluid port, when there is mechanical pressure between the end-located boundary surfaces.

Consequently, the coupling system essentially has two main components in the form of a first coupling half and a second coupling half. The first coupling half principally has the first main body and a number of first connectors. Similarly, the second coupling half has the second main body and likewise has a number of second connectors, the size, embodiment and position of which are matched to the first connectors on the first main body. In this arrangement, the number, size and position of the connectors are dependent, in particular, on the number of fluid lines to be connected, the intended use, the type of fluid and the system pressure and can be adapted as desired without departing from the core concept of the invention.

The first connectors and the second connectors are embodied in such a way that they produce adequate sealing to connect the interior spaces of the axial sealing sleeves without leaks by one end-located boundary surface being pressed or placed on the other end-located boundary surface. In addition, a fluid connection between a fluid port and an interior space of the axial sealing sleeve is provided in both connectors. By means of the closure devices, these two fluid connections are interrupted when the first and the second connector are separated from one another. If there is an increased pressure at the respective connectors, this additionally increases the sealing effect since the respective closure device is pressed into its sealing seat.

This means that the two coupling halves in the form of the first main body with first connectors and of the second main body with second connectors must be pressed onto one another in order to open the closure devices of the first and the second connector, i.e. to bring them into their respective open position. In this position in which they are pressed onto one another, the two main bodies can be fixed relative to one another to ensure a permanent fluid connection between the first fluid port and the second fluid port.

One particularly great advantage of this embodiment is that both closure devices of two connectors to be connected to one another are surrounded by an axial sealing sleeve, the mutually facing end-located boundary surfaces of which can be brought into sealing surface contact. The required tolerance of the dimensions of the axial sealing sleeves and of the end-located boundary surfaces is significantly coarser than in the case of known coupling systems, which rely on guide pins and individual radial seals, which must be fitted accurately into corresponding holes. In establishing a connection between two abovementioned connectors, it is sufficient for a sealing element arranged on one of the end-located boundary surfaces to be brought into full contact with both boundary surfaces, for example. Depending on the size of the axial sealing sleeves and of the boundary surfaces, the relative position of the connectors can differ significantly from a concentric alignment.

In selecting the spring stiffnesses, it should be noted that the spring which is arranged in the connector that is connected to a pressurized fluid should have a higher spring stiffness. This can be the second connector, for example, which is in fluid communication with a pressure line.

An axial sealing sleeve can be understood as a body which is open at at least one end, which encloses a cavity and which has a closed shell that ends in the boundary surface. An axial sealing sleeve can be cylindrical in shape, at least in some region or regions, for example, with the result that the end-located boundary surface is a ring. A closure device arranged in the axial sealing sleeve is furthermore responsible for the fluid connection between a region of an interior space of the axial sealing sleeve which is adjacent to the boundary surface and a side remote from the boundary surface, at which the fluid connection is arranged. The specific detailed configuration of the closure device can depend on the configuration of the axial sealing sleeve and on the desired mobility of the axial sealing sleeve or of the closure device. The aim is, when joining the two end-located boundary surfaces, to initiate a movement of both closure devices relative to the axial sealing sleeve, whether by moving the axial sealing sleeve or the relevant closure device, thus ensuring that both closure devices are in the open position thereof when the end-located boundary surfaces are in flush surface contact.

The first axial sealing sleeve is arranged rigidly on the first main body and, in an interior space, has a through flow opening surrounded by an edge surface. The first closure device has an axially guided first closure disc, which is arranged on a side of the edge surface which faces away from the end-located boundary surface. A first spring is arranged between the first closure disc and an end surface remote from the end-located boundary surface and is designed to press the first closure disc onto the edge surface. The rigidly arranged axial sealing sleeve can consequently be pressed onto the second axial sealing sleeve in order to enter into a sealing joint. In this process, a deflection of the first closure disc has to be carried out, the closure disc being pressed onto the edge surface. It is possible, for instance, for the first closure disc to have a pin, a body which is elongate, at least in some region or regions, or any other desired body which extends in an axial direction from the first closure disc towards the end-located boundary surface. By pressing the first axial sealing sleeve onto the second axial sealing sleeve, it is possible for this pin or other body to be brought into stop contact with another corresponding body of matching shape on a second connector, thereby exerting a pressure force on the first closure disc and hence the first spring. The first closure device should be dimensioned in such a way that, when the sealing joint between the end-located boundary surfaces has been achieved, the first closure disc is at a sufficiently large distance from the edge surface to allow substantially unhindered through flow of the fluid. When the first connector is released from the second connector again, the force acting on the first closure disc is eliminated, with the result that the first closure disc rests once again on the edge surface. The first connector is thus closed again.

For sealing between the first closure disc and the first edge surface, a sealing ring is arranged between the first closure disc and the edge surface.

The first axial sealing sleeve has an axial guide bush, in which a first guide pin connected to the first closure disc is movably mounted, said pin extending from the first closure disc in a direction away from the first end-located boundary opening. The axial guide bush can extend along the longitudinal axis of the first connector, for example, and can thus be arranged concentrically with other devices of the first connector. It is conceivable for the at least one first through flow opening to be embodied as a multiplicity of smaller openings, which are arranged around the guide bush. By means of axial guidance of the first closure disc in the guide bush, precise alignment of the first closure disc can be achieved, this being completely independent of external conditions. The end-located boundary surfaces of the first connector and of the second connector could differ significantly from a concentric arrangement, for example, without this having effects on the positioning of the first closure disc. The arrangement of a guide bush and the use of a guide pin are mechanically particularly simple and can be adapted in any desired manner, e.g. by varying the length of the guide bush and the diameter and length of the guide pin.

In an advantageous embodiment, the first axial sealing sleeve has a disc-shaped shoulder, in which a plurality of first through flow openings is arranged between the axial guide bush and the edge surface. The effective flow cross section of the at least one first through flow opening can be influenced directly by the choice of the number of through flow openings between the edge surface and the axial guide bush.

It is conceivable for a plurality of first through flow openings to be distributed uniformly or non-uniformly on an annular path around the guide bush. The disc-shaped shoulder can be understood as a disc which is situated in the interior of the first axial sealing sleeve.

The first guide pin can have a rounded end facing away from the first main body. It is thereby possible to precisely define the contact area with a corresponding element of the second connector. In this case, the contact area should, in particular, be provided centrally, thus avoiding one-sided introduction of force into the first guide pin and hence a risk of tilting.

The second closure device has a recess, which faces away from the second main body and is designed to establish surface contact with the first guide pin. Through the production of the recess, which has a surface surrounded by an edge, the location of surface contact between the first guide pin and the second closure device is likewise precisely defined. Given appropriate configuration of the edge, it is furthermore possible to ascertain visually and haptically when the first connector and the second connector deviate greatly from a concentric arrangement. In this case, the first guide pin can rest on the edge and can prevent complete pressing together of the connectors. There would then remain a gap owing to the jamming first guide pin.

In an advantageous embodiment, the second axial sealing sleeve is arranged in an axially movable manner on the second main body and has a second through flow opening surrounded by a second edge surface on the second end surface. The second closure device has a second closure disc, which is rigidly connected to the second main body and is arranged on a side of the second edge surface which faces away from the second main body, and wherein a second spring is arranged between the second axial sealing sleeve and the second main body and is designed to press the second edge surface onto the second closure disc. This embodiment of the second connector or second coupling half is kinematically reversed in relation to the above-explained embodiment of the first coupling half or first connector. Consequently, the second axial sealing sleeve is pushed continuously away from the second main body by the second spring. The second closure disc, which is rigidly connected to the second main body, can limit the movement of the second axial sealing sleeve and simultaneously bring about closure of the second connector by covering the second edge surface. If, therefore, the second connector is brought into contact with a first connector, the second axial sealing sleeve is deflected towards the second main body against the spring force, thus opening a through flow opening at the second axial sealing sleeve in the case of the rigidly mounted second closure disc. In this embodiment, care should be taken to ensure that the second axial sealing sleeve has sufficient space to enter against the spring force. For this purpose, the main body can have a correspondingly shaped recess, for example.

A sealing ring can furthermore be arranged between the second closure disc and the second edge surface in order to achieve a seal between the second closure disc and the second axial sealing sleeve.

The second axial sealing sleeve can furthermore be mounted movably in a guide sleeve, wherein the guide sleeve is rigidly connected to the second main body. The guide sleeve can have a larger diameter than the second axial sealing sleeve. A radial seal, by means of which sealing between the two sleeves is achieved, can be arranged between the two sleeves. A minimum possible friction coefficient is desirable when selecting the radial seal, and it is generally possible to achieve this with radial sealing rings, i.e. lip seals, X rings or the like.

Furthermore, the guide sleeve, as indicated above, can have a depression, which is designed to accommodate the second axial sealing sleeve in a position deflected towards the second main body. It is thereby possible to make the coupling system even more compact and to hold the second closure disc reliably in the predetermined position when the two connectors are in a connected state.

The above-mentioned recess, by means of which surface contact with the first guide pin can be established, is arranged on a side of the second closure disc facing away from the second main body.

Furthermore, the end-located boundary surfaces of the first connector and of the second connector can each be arranged in an annular connecting flange, wherein the connecting flanges of the first connector and of the second connector are shaped to correspond to one another. This enables the two connectors to be clamped to one another via the connecting flanges with the aid of screw fastening means or the like.

The invention furthermore relates to a vehicle having a plurality of fluid lines and at least one system in accordance with the above description, which is connected to the fluid lines.

As a particular preference, the vehicle is an aircraft. Many different fluid systems and loads can be connected reliably and safely here by means of a coupling system, while, at the same time, assembly times are reduced.

### BRIEF DESCRIPTION OF THE FIGURES

Further features, advantages and possible uses of the present invention will be found in the following description of the embodiment examples and the figures. In this context, all the features described and/or depicted, either in themselves or in any combination, form the subject of the invention, irrespective of the way they are combined in the individual claims or dependency references thereof. In the figures, the same reference signs furthermore stand for identical or similar objects.
Figs 1A to ID show the coupling system in several schematic views and states.
Figs 2A to 2C show the coupling system in the form of a possible embodiment example in several states.

### DETAILED DESCRIPTION OF ILLUSTRATIVE EMBODIMENTS

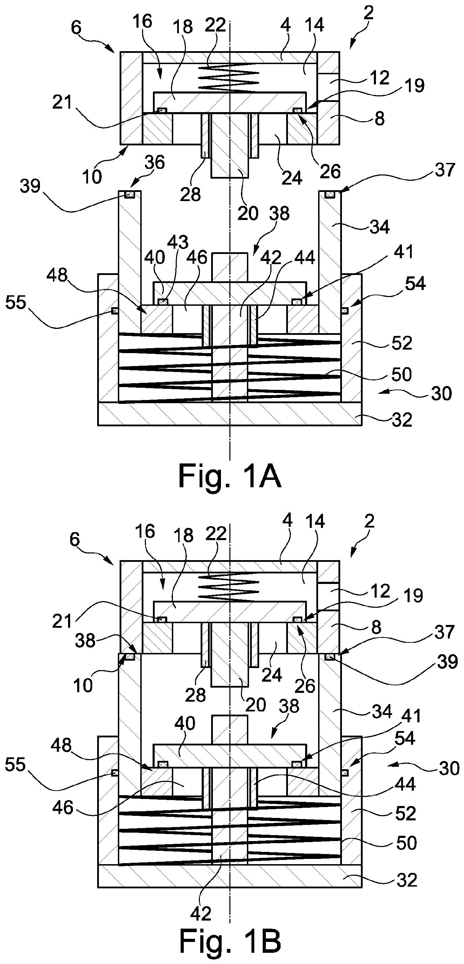

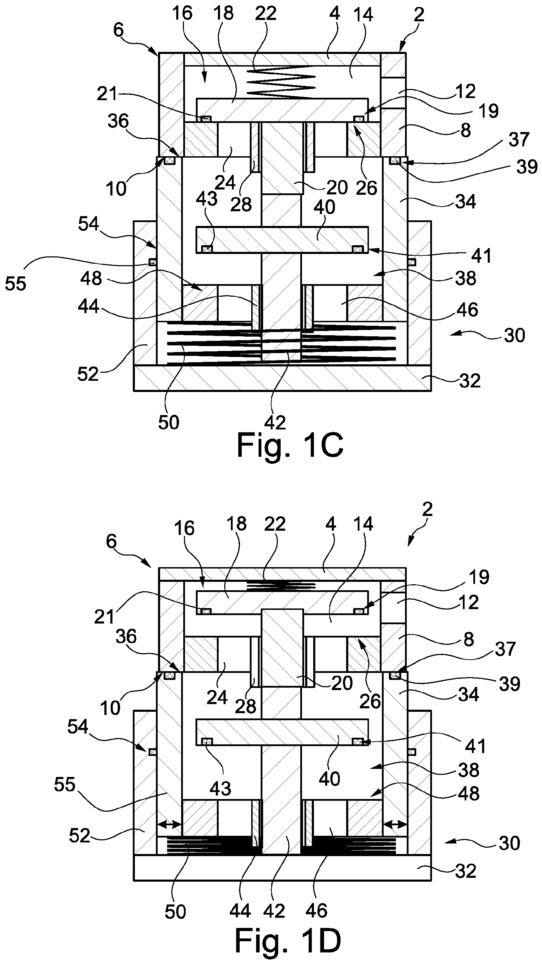

Figures 1A to ID show the basic principle of a coupling system 2 according to the invention in schematic views. The coupling system 2 has a first main body 4, on which a first connector 6 is arranged. The first main body 4 is indicated only by a small, flat element. However, this first main body 4 can be, in particular, a housing surface or the like, on which a multiplicity of first connectors 6 is arranged and which extends over a significantly larger area than shown here.

The first connector has a first axial sealing sleeve 8, which extends outwards from the first main body 4. The first axial sealing sleeve 8 has an end-located first boundary surface 10, which is arranged on a side of the first axial sealing sleeve 8 which faces away from the first main body 4. There is a first fluid port 12 on a side of the first axial sealing sleeve 8 remote from the first end-located boundary surface 10, said port extending radially outwards by way of example. The first fluid port 12 is in fluid communication with an interior space 14 of the first axial sealing sleeve 8.

Also arranged in the interior space 14 is a first closure device 16, which has a first closure disc 18, a first guide pin 20, a first spring 22, a plurality of first through flow openings 24 and a first edge surface 26. The first closure disc 18 is pressed onto the edge surface 26 by the first spring 22 and is guided in a first bush 28 by the first guide pin 20. The first spring 22 acts in the direction of the first end-located boundary surface 10, wherein the first edge surface 26 faces away from the first end-located boundary surface 10. This means that the first through flow openings 24 are closed when the first closure disc 18 is in flush surface contact with the first edge surface 26. To seal the first closure disc 18 at the first edge surface 26, an encircling groove 19, in which a sealing ring 21 rests, is arranged on the first closure disc 18, by way of example. However, the groove 19 and the sealing ring 21 could also be arranged in the first edge surface 26. Pressing the guide pin 20 towards the first spring 22 opens the first closure device 16, and a fluid connection is formed between the first through flow openings 24 and the first fluid port 12.

The coupling system 2 furthermore has a second connector 30, which is arranged on a second main body 32. Here too, it is understandable that the second main body 32 is likewise only indicated and can extend over a significantly larger area than shown here. Furthermore, the number of second connectors 30 should be correlated with the number of first connectors 6. Moreover, the positions of the first connectors 6 and of the second connectors 30 should be matched to the respective main bodies 4 and 32.

The second connector 30 has a movably mounted second axial sealing sleeve 34, which has a second end-located boundary surface 36. Arranged therein is an encircling groove 37 with a sealing ring 39, which can establish sealing surface contact with the first boundary surface 10 of the first axial sealing sleeve 8. The groove 37 and the sealing ring 39 could also be arranged in the first boundary surface 10. A second closure device 38 has a second closure disc 40 and a second guide pin 42. A second guide bush 44 connected to the second axial sealing sleeve 34 surrounds the second guide pin 42 in a flush-fitting manner. In addition, there are second through flow openings 46, which are covered by the second closure disc 40 when the second closure disc 40 is in surface contact with a second edge surface 48. The second axial sealing sleeve 34 is pushed away from the second main body 32 by a second spring 50, with the result that the second edge surface 48 is pressed onto the second closure disc 40. For sealing, the second closure disc 40 has, by way of example, an encircling groove 41 with a sealing ring 43 integrated therein. The groove 41 and the sealing ring 43 can furthermore also be arranged in the edge surface 48. When the second closure disc 40 is in surface contact with the second edge surface 48, the sealing ring 43 is pressed into flush-fitting contact with the edge surface 48.

A second fluid port (not shown here) can, for example, be present directly in the second main body 32, on which the second spring 50 is supported. Furthermore, a rigid bearing sleeve 52 connected to the second main body 32 is provided, said sleeve having a radial seal in the form of a sealing ring 55 in an encircling groove 54 to establish a seal for a connection to the second axial sealing sleeve 34. However, the groove 54 and the sealing ring 55 could also be arranged in the second axial sealing sleeve. The bearing sleeve 52 does not necessarily have to be a separate component but can also be implemented as a depression in the second main body 32.

In this example, the second axial sealing sleeve 34 is arranged on an inner side of the bearing sleeve 52, and the radial seal 54 is in the form of a sealing ring in a corresponding sealing seat. The second guide pin 42 is mounted rigidly on the second main body 32. By means of the second guide bush 44, the second axial sealing sleeve 34 can be moved in a guided manner along the longitudinal axis. In this arrangement, the second closure device 38 is opened as soon as the second end-located boundary surface 36 is moved towards the second main body 32 and, consequently, the second through flow openings 46 are exposed. In the following Figures 1B to ID, the establishment of a connection between the first connector 6 and the second connector 30 is illustrated.

In Figure 1B, the first connector 6 is placed on the second connector 30. The two end-located boundary surfaces 10 and 36 are consequently in surface contact and press on the sealing ring 39 on both sides. The first closure device 16 and the second closure device 38 each press onto the associated sealing ring 21 and 43 and are thereby closed, with the result that there is no fluid communication between the first fluid port 12 and the second fluid port (not shown). In this illustration, it can be seen that precise alignment of the first boundary surface 10 on the second boundary surface 36 is not absolutely essential. By means of appropriate dimensioning of these boundary surfaces 10 and 36, a safe and reliable fluid connection can be established, even when the connectors 6 and 30 are positioned in a relatively inaccurate way relative to one another, as shown in the following figures.

In Figure 1C, it can be seen that, when there is surface contact between the boundary surfaces 10 and 36, a pressure force is exerted on the connectors 6 and 30, with the result that the second spring 50 is compressed. As a result, the first guide pin 20 and the second guide pin 42 likewise enter into surface contact. In the position shown in Figure 1C, the second edge surface 48 has come away from the second closure disc 40, with the result that a fluid connection is established between the through flow openings 46 and an opening bounded by the second end-located boundary surface 36. The first closure disc 18 is still resting on the first edge surface 26, and, as a result, the first closure device 16 is not yet closed.

Figure ID shows a state in which an even greater pressure force is exerted on the two connectors 6 and 30, with the result that the first guide pin 20 is also moved in the first guide bush 28 against the spring force of the first spring 22. The first closure device 16 therefore likewise opens. Irrespective of precise alignment of the two connectors 6 and 30 relative to one another, a reliable fluid connection can thus be established. If there is a plurality of first and second connectors on flat main bodies 4 and 32, these can consequently be placed one on top of the other and then clamped together, with the result that the connectors 6 and 30 open. This position can then be held by screw fastening.

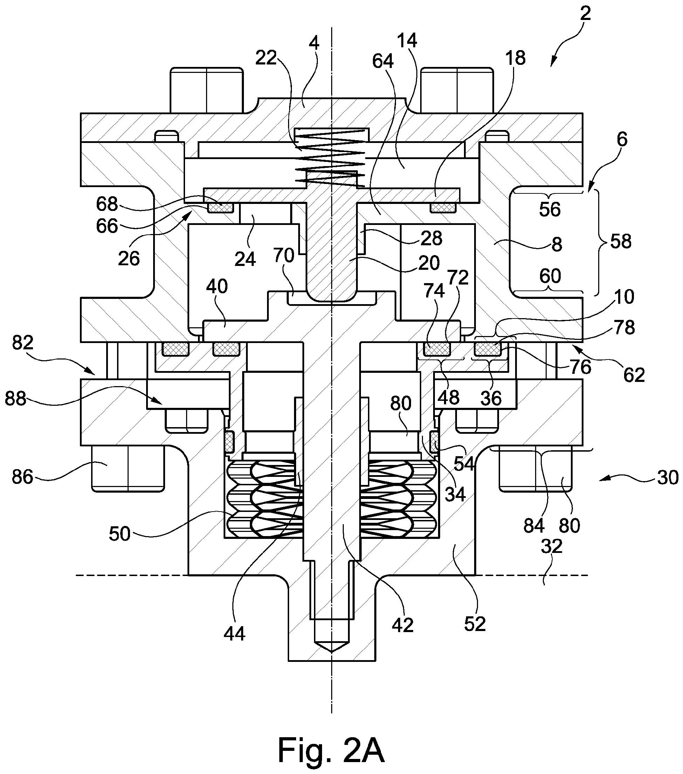

One possible specific configuration is illustrated in Figures 2A to 2C. Figure 2A shows the coupling system 2 in a lateral section. The first connector 6 has a structure which corresponds substantially to the schematic illustration in the previous figures. However, the shape of the first axial sealing sleeve 8 is embodied in a manner appropriate to the loads and to assembly. A substantially annular bearing flange 56 is used for connection to the first main body 4 since this annular addition provides a relatively large supporting surface. Adjoining this annular bearing flange 56 in the axial direction is the substantially cylindrical portion 58, which ends in a likewise substantially annular first connecting flange 60. This flange provides the end-located boundary surface 10 on a side remote from the bearing flange 56. The annular addition in the form of the first connecting flange 60 provides a first supporting surface 62 radially further towards the outside, on which the second connector 30 rests when it is connected to the first connector 6.

In the interior of the first axial sealing sleeve 8 there is a kind of disc-shaped shoulder 64, which bears both the first guide bush 28 and the first through flow openings 24. An annular groove 66 with a sealing ring 68 located therein is arranged on a side of the shoulder 64 facing the first main body 4. The sealing ring 68 leads to leak-tight closure between the first closure disc 18 and the first through flow openings 24. At this point, it should be noted that, when the interior space 14 of the first connector 6 is subjected to pressure, the first closure disc 18 is pressed continuously onto the edge surface 26 and hence onto the sealing ring 68.

The first guide pin 20 is rounded at its end remote from the main body 4 in order to precisely limit the contact area, even when the connectors 6 and 30 are inaccurately positioned.

In Figures 2A to 2C, the second main body 32 is indicated only by a dashed line, and the second connector 30 is secured thereon by means of its guide sleeve 52. The second connector 30 can be screwed into the second main body 32 by means of an end at the bottom in the drawing, for instance. On a side facing away from the second main body 32, the second guide pin 42 of the second connector 30 has a recess 70, with which the first guide pin 20 comes into contact when the first connector 6 and the second connector 30 are joined together.

In Fig. 2A, the second closure disc 40 rests on the edge surface 48 of the second axial sealing sleeve 34. An encircling groove 72, which carries a sealing ring 74, is arranged in the edge surface 48. This leads to sealing of the second connector 34 with respect to the outside when the second connector 30 is not connected to the first connector 6. Furthermore, the second axial sealing sleeve 34 is provided with a shape such that the end-located boundary surface 36 adjoins the edge surface 48 radially on the outside. There too, a groove 76 can be arranged, in which a sealing ring 78 is placed. Sealing with the first axial sealing sleeve 8 can thereby be brought about.

The second guide pin 42 is connected in a fixed manner to the second main body 32 and guides the second axial sealing sleeve 34 via the second guide bush 44, which is mounted in a sliding manner on a stem of the second guide pin 42. The second spring 50 is arranged between a disc-shaped shoulder 80 and an end of the guide sleeve 52 facing the second main body 32 and urges the second axial sealing sleeve 34, via the disc-shaped shoulder 30, in the direction of the second closure disc 40 in order to close the second connector 30 as soon as it is not connected to the first connector 6. When the two connectors 6 and 30 are connected, the second closure disc 40 is deflected towards the second main body 32. For secure reception of the second closure disc 40, the guide sleeve 52 has a correspondingly shaped depression 88 on a side facing the first connector 6.

When the first connector 6 is connected to the second connector 30, the first supporting surface 62 comes to rest on a second supporting surface 82 of a second connecting flange 84. In this position, the first connecting flange 60 can be clamped to the second connecting flange 84, as indicated by the screw fastening means 86. In Fig. 2A, the first connector 6 and the second connector 30 are shown in a position placed one on top of the other in which no fluid connection between the two has yet been established.

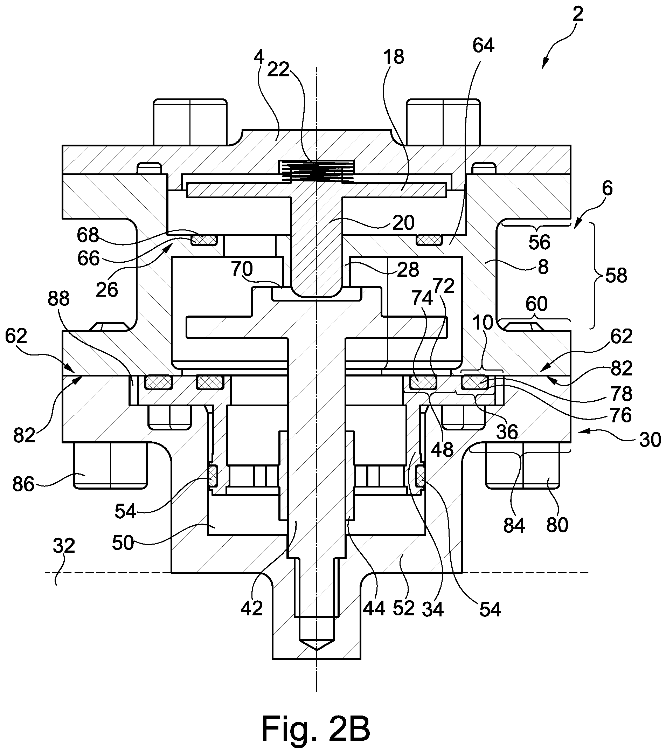

In Fig. 2B, the state of the two interconnected connectors 6 and 30 is illustrated, which are clamped together by the screw fastening means 86. The depression 88 should preferably be dimensioned in such a way that the second axial sealing sleeve 34 is not clamped flush either with the first axial sealing sleeve 8 or with the guide sleeve 52, in order to avoid excessive mechanical surface pressure. On the contrary, the depression should allow reliable compression of the sealing ring 78 with the end-located boundary surface 10 for the sake of adequate sealing.

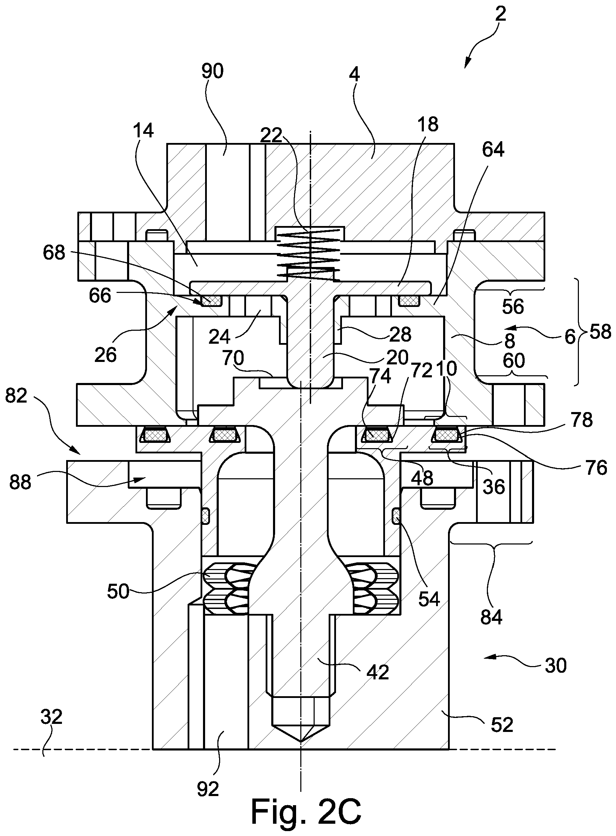

As can be seen in the illustration from Fig. 2C, the coupling system 2 is capable of tolerating significant deviations from a concentric arrangement of the first connector 6 and of the second connector 30 relative to one another. This illustration is shown from a different perspective and likewise contains a first fluid port 90 and a second fluid port 92. These are not illustrated in the other drawings and are only positioned in an illustrative way in Fig. 2C. Different embodiments of the first fluid port 90 and of the second fluid port 92 are also conceivable.

Different guidance of the second axial sealing sleeve 34 can also be seen in Fig. 2C. Here, this is not in an axial guide bush 44 but by means of a lateral surface in the guide sleeve 52, said lateral surface having the sealing ring 54.

As a supplementary point, it may be pointed out that "having" does not exclude any other elements or steps and "a" or "an" does not exclude a multiplicity. Furthermore, it should be noted that features which have been described with reference to one of the above embodiment examples can also be used in combination with other features of other embodiment examples described above. Reference signs in the claims should not be regarded as restrictive.

## Claims

1. Coupling system (2) for providing a plurality of fluid connections, having
a first main body (4),
a second main body (32),
a plurality of first connectors (6), which are arranged on the first main body (4), and
a plurality of second connectors (30), which are arranged at positions on the second main body (32) which correspond to the first connectors (6) in order to form connector pairs,
wherein each first connector (6) has a first axial sealing sleeve (8) and a first closure device (16) surrounded by said first axial sealing sleeve, which can be moved relative to one another in an axial direction between a first open position and a first closed position and are urged into the first closed position by a first spring (22),
wherein each second connector (32) has a second axial sealing sleeve (34) and a second closure device (38) surrounded by said second axial sealing sleeve, which can be moved relative to one another in an axial direction between a second open position and a second closed position and are urged into the second closed position by a second spring (50),
wherein the first axial sealing sleeve (8) and the second axial sealing sleeve (34) each have an end-located boundary surface (10, 36) and a fluid port (12, 90) remote from said surface,
wherein the first connector (6) and the second connector (32) are designed to bring about sealing between the axial sealing sleeves (8, 34) and to move the first closure device (16) and the second closure device (38) from the respective closed position into the respective open position, in which a fluid connection is established between the respective end-located boundary surface (10, 36) and the respective fluid port (12, 90), when there is mechanical pressure between the end-located boundary surfaces (10, 36),
wherein the first axial sealing sleeve (8) is arranged rigidly on the first main body (4) and, in an interior space (14), has at least one first through flow opening (24) surrounded by a first edge surface (26),
wherein the first closure device (16) has an axially guided first closure disc (18), which is arranged on a side of the first edge surface (26) which faces away from the end-located boundary surface (10),
wherein the first spring (22) is arranged between the first closure disc (18) and an end surface remote from the end-located boundary surface (10) and is designed to press the first closure disc (18) onto the first edge surface (26),
wherein the first axial sealing sleeve (8) has an axial guide bush (28), in which a first guide pin (20) connected to the first closure disc (18) is movably mounted, **characterised in that** said pin extends from the first closure disc (18) in a direction towards the first end-located boundary surface (10), and
wherein the second closure device (38) has a recess (70), which faces away from the second main body (32) and is designed to establish surface contact with the first guide pin (20).

2. Coupling system (2) according to Claim 1,
having a sealing ring (21, 68) between the first closure disc (18) and the first edge surface (26).

3. Coupling system (2) according to Claim 1 or 2,
wherein the first axial sealing sleeve (8) has a disc-shaped shoulder (64), in which a plurality of first through flow openings (24) is arranged between the axial guide bush (28) and the first edge surface (26).

4. Coupling system (2) according to any of the preceding Claims,
wherein the first guide pin (20) has a rounded end facing away from the first main body (4).

5. Coupling system (2) according to one of the preceding claims,
wherein the second axial sealing sleeve (34) is arranged in an axially movable manner on the second main body (32) and has at least one second through flow opening (46) surrounded by a second edge surface (48) on the second end-located boundary surface (36),
wherein the second closure device (38) has a second closure disc (40), which is rigidly connected to the second main body (32) and is arranged on a side of the second edge surface (48) which faces away from the second main body (32), and
wherein a second spring (50) is arranged between the second axial sealing sleeve (34) and the second main body (32) and is designed to press the second edge surface (48) onto the second closure disc (40).

6. Coupling system (2) according to Claim 5,
having a sealing ring between the second closure disc (40) and the second edge surface (48).

7. Coupling system (2) according to Claim 6,
wherein the second axial sealing sleeve (34) is movably mounted in a guide sleeve (52),
wherein the guide sleeve (52) is rigidly connected to the second main body (32).

8. Coupling system (2) according to Claim 7,
wherein the guide sleeve (52) has a depression (88), which is designed to accommodate the second axial sealing sleeve (34) in a position deflected towards the second main body (32).

9. Coupling system (2) according to one of Claims 5 to 8,
wherein the recess (70) is arranged on a side of the second closure disc (40) which faces away from the second main body (32).

10. Coupling system (2) according to one of the preceding claims,
wherein the end-located boundary surfaces (10, 36) of the first connector (6) and of the second connector (30) are each arranged in an annular connecting flange (60, 84), wherein the connecting flanges (60, 84) of the first connector (6) and of the second connector (30) are shaped to correspond to one another.

11. Vehicle having a plurality of fluid lines and at least one coupling system (2) according to one of Claims 1 to 10, which is connected to the fluid lines.

12. Vehicle according to Claim 11, wherein the vehicle is an aircraft.

## Patentansprüche

1. Kupplungssystem (2) zur Bereitstellung einer Vielzahl von Fluidverbindungen, mit
einen ersten Hauptteil (4),
einen zweiten Hauptteil (32),
eine Mehrzahl von ersten Verbindern (6), die auf dem ersten Hauptkörper (4) angeordnet sind, und
eine Mehrzahl von zweiten Verbindern (30), die an Positionen auf dem zweiten Hauptkörper (32) angeordnet sind, die den ersten Verbindern (6) entsprechen, um Paare von Verbindern zu bilden,
wobei jeder erste Verbinder (6) eine erste axiale Dichtungshülse (8) und eine erste Verschlussvorrichtung (16) aufweist, die von der ersten axialen Dichtungshülse umgeben ist, die relativ zueinander in einer axialen Richtung zwischen einer ersten offenen Position und einer ersten geschlossenen Position bewegt werden können und durch eine erste Feder (22) in die erste geschlossene Position gedrängt werden,
wobei jeder zweite Verbinder (32) eine zweite axiale Dichtungshülse (34) und eine zweite Verschlussvorrichtung (38) aufweist, die von der zweiten axialen Dichtungshülse umgeben ist, die relativ zueinander in einer axialen Richtung zwischen einer zweiten offenen Position und einer zweiten geschlossenen Position bewegt werden können und durch eine zweite Feder (50) in die zweite geschlossene Position gedrückt werden,
wobei die erste axiale Dichtungshülse (8) und die zweite axiale Dichtungshülse (34) jeweils eine am Ende angeordnete Grenzfläche (10, 36) und einen von dieser Oberfläche entfernten Fluidanschluss (12, 90) aufweisen,
wobei der erste Verbinder (6) und der zweite Verbinder (32) so gestaltet sind, dass sie eine Abdichtung zwischen den axialen Dichtungshülsen (8, 34) bewirken und die erste Verschlussvorrichtung (16) und die zweite Verschlussvorrichtung (38) aus der jeweiligen geschlossenen Position in die jeweilige offene Position bewegen, in der eine Fluidverbindung zwischen der jeweiligen am Ende angeordneten Grenzfläche (10, 36) und dem jeweiligen Fluidanschluss (12, 90) hergestellt wird, wenn ein mechanischer Druck zwischen den am Ende angeordneten Grenzflächen (10, 36) besteht,
wobei die erste axiale Dichtungshülse (8) starr auf dem ersten Hauptkörper (4) angeordnet ist und in einem Innenraum (14) mindestens eine erste Durchflussöffnung (24) aufweist, die von einer ersten Randfläche (26) umgeben ist,
wobei die erste Verschlussvorrichtung (16) eine axial geführte erste Verschlussscheibe (18) aufweist, die auf einer Seite der ersten Randfläche (26) angeordnet ist, die von der stirnseitigen Begrenzungsfläche (10) abgewandt ist,
wobei die erste Feder (22) zwischen der ersten Verschlussscheibe (18) und einer Endfläche, die von der am Ende angeordneten Grenzfläche (10) entfernt ist, angeordnet ist und so ausgelegt ist, dass sie die erste Verschlussscheibe (18) auf die erste Randfläche (26) drückt,
wobei die erste axiale Dichtungshülse (8) eine axiale Führungsbuchse (28) aufweist, in der ein mit der ersten Verschlussscheibe (18) verbundener erster Führungsstift (20) beweglich gelagert ist,
**dadurch gekennzeichnet, dass** sich der Stift von der ersten Verschlussscheibe (18) in einer Richtung auf die erste am Ende angeordnete Grenzfläche (10) erstreckt, und
wobei die zweite Verschlussvorrichtung (38) eine Aussparung (70) aufweist, die von dem zweiten Hauptkörper (32) abgewandt und so gestaltet ist, dass sie einen Oberflächenkontakt mit dem ersten Führungsstift (20) herstellt.

2. Kupplungssystem (2) nach Anspruch 1,
mit einem Dichtungsring (21, 68) zwischen der ersten Verschlussscheibe (18) und der ersten Randfläche (26).

3. Kupplungssystem (2) nach Anspruch 1 oder 2,
wobei die erste axiale Dichtungshülse (8) eine scheibenförmige Schulter (64) aufweist, in der zwischen der axialen Führungsbuchse (28) und der ersten Randfläche (26) eine Vielzahl von ersten Durchflussöffnungen (24) angeordnet ist.

4. Kupplungssystem (2) nach einem der vorstehenden Ansprüche,
wobei der erste Führungsstift (20) ein abgerundetes Ende aufweist, das von dem ersten Hauptkörper (4) weg weist.

5. Kupplungssystem (2) nach einem der vorstehenden Ansprüche,
wobei die zweite axiale Dichtungshülse (34) axial beweglich an dem zweiten Hauptkörper (32) angeordnet ist und mindestens eine zweite Durchflussöffnung (46) aufweist, die von einer zweiten Randfläche (48) an der zweiten stirnseitigen Begrenzungsfläche (36) umgeben ist,
wobei die zweite Verschlussvorrichtung (38) eine zweite Verschlussscheibe (40) aufweist, die starr mit dem zweiten Hauptkörper (32) verbunden und auf einer Seite der zweiten Randfläche (48) angeordnet ist, die von dem zweiten Hauptkörper (32) abgewandt ist, und
wobei eine zweite Feder (50) zwischen der zweiten axialen Dichtungshülse (34) und dem zweiten Hauptkörper (32) angeordnet ist und so ausgelegt ist, dass sie die zweite Randfläche (48) auf die zweite Verschlussscheibe (40) drückt.

6. Kupplungssystem (2) nach Anspruch 5,
mit einem Dichtungsring zwischen der zweiten Verschlussscheibe (40) und der zweiten Randfläche (48).

7. Kupplungssystem (2) nach Anspruch 6,
wobei die zweite axiale Dichtungshülse (34) beweglich in einer Führungshülse (52) montiert ist,
wobei die Führungshülse (52) starr mit dem zweiten Hauptkörper (32) verbunden ist.

8. Kupplungssystem (2) nach Anspruch 7,
wobei die Führungshülse (52) eine Vertiefung (88) aufweist, die dazu ausgelegt ist, die zweite axiale Dichtungshülse (34) in einer zum zweiten Hauptkörper (32) hin abgelenkten Position aufzunehmen.

9. Kupplungssystem (2) nach einem der Ansprüche 5 bis 8,
wobei die Aussparung (70) auf einer Seite der zweiten Verschlussscheibe (40) angeordnet ist, die von dem zweiten Hauptkörper (32) abgewandt ist.

10. Kupplungssystem (2) nach einem der vorstehenden Ansprüche,
wobei die am Ende angeordneten Begrenzungsflächen (10, 36) des ersten Verbinders (6) und des zweiten Verbinders (30) jeweils in einem ringförmigen Verbindungsflansch (60, 84) angeordnet sind, wobei die Verbindungsflansche (60, 84) des ersten Verbinders (6) und des zweiten Verbinders (30) so geformt sind, dass sie einander entsprechen.

11. Fahrzeug mit einer Mehrzahl von Fluidleitungen und mindestens einem Kupplungssystem (2) nach einem der Ansprüche 1 bis 10, das mit den Fluidleitungen verbunden ist.

12. Fahrzeug nach Anspruch 11, wobei das Fahrzeug ein Flugzeug ist.

## Revendications

1. Système de couplage (2) pour fournir une pluralité de connexions de fluide, ayant
un premier corps principal (4),
un deuxième corps principal (32),
une pluralité de premiers connecteurs (6), qui sont disposés sur le premier corps principal (4), et
une pluralité de seconds connecteurs (30), qui sont disposés à des positions sur le second corps principal (32) qui correspondent aux premiers connecteurs (6) afin de former des paires de connecteurs,
dans lequel chaque premier connecteur (6) comporte un premier manchon d'étanchéité axial (8) et un premier dispositif de fermeture (16) entouré par ledit premier manchon d'étanchéité axial, qui peuvent être déplacés l'un par rapport à l'autre dans une direction axiale entre une première position ouverte et une première position fermée et sont poussés dans la première position fermée par un premier ressort (22),
dans lequel chaque second connecteur (32) comporte un second manchon d'étanchéité axial (34) et un second dispositif de fermeture (38) entouré par ledit second manchon d'étanchéité axial, qui peuvent être déplacés l'un par rapport à l'autre dans une direction axiale entre une seconde position ouverte et une seconde position fermée et sont poussés dans la seconde position fermée par un second ressort (50),
dans lequel le premier manchon d'étanchéité axial (8) et le second manchon d'étanchéité axial (34) ont chacun une surface limite (10, 36) située à l'extrémité et un orifice de fluide (12, 90) éloigné de ladite surface,
dans lequel le premier connecteur (6) et le second connecteur (32) sont conçus pour réaliser l'étanchéité entre les manchons d'étanchéité axiaux (8, 34) et pour déplacer le premier dispositif de fermeture (16) et le second dispositif de fermeture (38) de la position fermée respective dans la position ouverte respective, dans laquelle une connexion de fluide est établie entre la surface limite respective (10, 36) située à l'extrémité et l'orifice de fluide respectif (12, 90), lorsqu'il y a une pression mécanique entre les surfaces limites (10, 36) situées à l'extrémité,
dans lequel le premier manchon d'étanchéité axial (8) est disposé de manière rigide sur le premier corps principal (4) et présente, dans un espace intérieur (14), au moins une première ouverture de passage (24) entourée d'une première surface de bord (26),
dans lequel le premier dispositif de fermeture (16) présente un premier disque de fermeture (18) guidé axialement, qui est disposé sur un côté de la première surface de bord (26) qui est opposé à la surface de délimitation (10) située à l'extrémité,
dans lequel le premier ressort (22) est disposé entre le premier disque de fermeture (18) et une surface d'extrémité éloignée de la surface limite (10) située à l'extrémité et est conçu pour presser le premier disque de fermeture (18) sur la première surface de bord (26),
dans laquelle le premier manchon d'étanchéité axial (8) comporte une douille de guidage axial (28), dans laquelle une première broche de guidage (20) reliée au premier disque de fermeture (18) est montée de manière mobile,
**caractérisé en ce que** ladite broche s'étend depuis le premier disque de fermeture (18) dans une direction vers la première surface limite (10) située à l'extrémité, et
dans lequel le deuxième dispositif de fermeture (38) comporte un évidement (70), qui est orienté à l'opposé du deuxième corps principal (32) et est conçu pour établir un contact de surface avec la première broche de guidage (20).

2. Système d'accouplement (2) selon la revendication 1,
ayant une bague d'étanchéité (21, 68) entre le premier disque de fermeture (18) et la première surface de bord (26).

3. Système d'accouplement (2) selon la revendication 1 ou 2,
dans lequel le premier manchon d'étanchéité axial (8) présente un épaulement en forme de disque (64), dans lequel une pluralité de premières ouvertures de passage (24) est disposée entre la douille de guidage axial (28) et la première surface de bord (26).

4. Système d'accouplement (2) selon l'une des revendications précédentes,
dans laquelle la première broche de guidage (20) a une extrémité arrondie tournée à l'opposé du premier corps principal (4).

5. Système d'accouplement (2) selon l'une des revendications précédentes,
dans lequel le deuxième manchon d'étanchéité axial (34) est disposé de manière axialement mobile sur le deuxième corps principal (32) et présente au moins une deuxième ouverture d'écoulement traversante (46) entourée par une deuxième surface de bord (48) sur la deuxième surface limite (36) située à l'extrémité,
dans lequel le deuxième dispositif de fermeture (38) comporte un deuxième disque de fermeture (40), qui est relié rigidement au deuxième corps principal (32) et est disposé sur un côté de la deuxième surface de bord (48) qui est opposé au deuxième corps principal (32), et
dans lequel un second ressort (50) est disposé entre le second manchon d'étanchéité axial (34) et le second corps principal (32) et est conçu pour presser la seconde surface de bord (48) sur le second disque de fermeture (40).

6. Système de couplage (2) selon la revendication 5,
ayant un joint d'étanchéité entre le deuxième disque de fermeture (40) et la deuxième surface de bord (48).

7. Système d'accouplement (2) selon la revendication 6,
dans lequel le deuxième manchon d'étanchéité axial (34) est monté de manière mobile dans un manchon de guidage (52),
dans lequel le manchon de guidage (52) est relié de manière rigide au deuxième corps principal (32).

8. Système d'accouplement (2) selon la revendication 7,
dans lequel le manchon de guidage (52) présente une dépression (88), qui est conçue pour recevoir le second manchon d'étanchéité axial (34) dans une position déviée vers le second corps principal (32).

9. Système d'accouplement (2) selon l'une des revendications 5 à 8,
dans lequel l'évidement (70) est disposé sur un côté du second disque de fermeture (40) qui est tourné à l'opposé du second corps principal (32).

10. Système de couplage (2) selon l'une des revendications précédentes,
les surfaces limites (10, 36) du premier connecteur (6) et du deuxième connecteur (30), situées aux extrémités, sont disposées chacune dans une bride de raccordement (60, 84) de forme annulaire, les brides de raccordement (60, 84) du premier connecteur (6) et du deuxième connecteur (30) étant formées de manière à se correspondre.

11. Véhicule comportant plusieurs conduites de fluide et au moins un système d'accouplement (2) selon l'une des revendications 1 à 10, qui est relié aux conduites de fluide.

12. Véhicule selon la revendication 11, dans lequel le véhicule est un avion.
